# EUROPÄISCHE PATENTSCHRIFT

(11) **EP 0 591 658 B1**
(45) Veröffentlichungstag und Bekanntmachung des Hinweises auf die Patenterteilung: **13.11.1996**
(21) Anmeldenummer: 93113229.4
(22) Anmeldetag: 18.08.1993
(51) Int. Cl.: D04H 1/42, D04H 1/54, E04B 1/78

(54) **Wärmedämmelement und Verfahren zu dessen Herstellung**
Thermal insulation element and process for its manufacture
Elément d'isolation thermique et procédé pour sa fabrication

(30) Priorität: 07.10.1992 DE 4233653
(43) Veröffentlichungstag der Anmeldung: 13.04.1994
(73) Patentinhaber: Steiner, Benno, D-83126 Flintsbach (DE)
(72) Erfinder: Steiner, Benno, D-83126 Flintsbach (DE)
(74) Vertreter: Müller-Boré & Partner Patentanwälte

(56) Entgegenhaltungen:
- WO-A-89/04886
- WO-A-91/08332
- DE-A- 4 108 110
- DE-U- 8 500 879
- GB-A- 1 141 162
- DATABASE WPI Week 9304, 29. Februar 1992 Derwent Publications Ltd., London, GB; AN 93034168 & SU-A-1 715 776 (BRESTOBLESELSTROI ASSOC.)

## Beschreibung

Die vorliegende Erfindung betrifft ein Wärmedämmelement gemäß dem Oberbegriff des Anspruchs 1 sowie ein Verfahren zu seiner Herstellung gemäß Anspruch 6.

Ein derartiges Wärmedämmelement ist beispielsweise bekannt aus der WO-A-9108332. Das vorbekannte Wärmedämmelement sieht einen Dämmstoff aus Flachs vor, der in Form eines Matte hergestellt wird.

Ferner ist aus der DE-GM 85 00 879 eine aus Naturprodukten hergestellte Wärmedämmplatte bekannt.

Wärmedämmelemente dienen zur Vermeidung von Wärmverlusten und somit Energieverlusten in Gebäuden und werden vielfältig im Hoch- und Tiefbau eingesetzt. Insbesondere eignen sie sich für Zwecke der Energieeinsparung als Dämmelemente an Wänden, Decken, Dächern, Türen und Fußböden von Gebäuden.

Trotz der bereits bekannten Verwendung einzelner Naturstoffe werden zur Wärmedämmung von Neubauten überwiegend synthetische Stoffe eingesetzt, z.B. Glaswolle, Steinwolle und Polystyrol. Diese Materialien bedürfen bei der Herstellung eines relativ hohen Energieaufwandes und lassen sich insbesondere nicht umweltgerecht entsorgen. Ferner ist Mineralwolle in der Regel mit Phenol-Formaldehydharz getränkt, was während der Verarbeitung und während der Dauer des Einsatzes in der Dämmzone zu einer Beeinträchtigung der Gesundheit von Personen führen kann, die mit der Mineralwolle in Kontakt geraten. Durch die Ausbildung von Kurzfasern während der Verarbeitung kommt es zu einem Gesundheitsrisiko, da die Fasern leicht eingeatmet werden und ein kanzerogener Einfluß nicht ausgeschlossen werden kann. Schließlich sind Beschwerden von Allergikern vielfach auf synthetische Dämmstoffe zurückzuführen.

Die vorliegende Erfindung hat die Angabe eines Wärmedämmelementes zur Aufgabe, das vollständig aus Naturprodukten gewonnen wird und sich ökologisch entsorgen läßt. Ferner sollte das erfindungsgemäße Wärmedämmelement diffusionsfähig sein und einen Gasaustausch zwischen der Raumluft und der Umgebungsluft zulassen, so daß ein günstiges Raumklima und eine damit verbundene Förderung der Gesundheit der Bewohner erreicht wird.

Erfindungsgemäß ist angegeben ein Wärmedämmelement gemäß Anspruch 1. Leinfasern stellen einen kostengünstigen, umweltfreundlichen und wärmetechnisch wirksamen Dämmstoff dar, der im Rahmen der vorliegenden Erfindung nutzbar gemacht werden kann und für die Landwirtschaft erweiterte Absatzmöglichkeiten bereitstellt. Die Feinfaserigkeit der Leinfasern bewirkt eine hohe Wärmeisolation derartiger Fasern, die insbesondere im Wand-, Decken, Dach-, Tür- und Fußbodenbereich von Gebäuden nutzbar gemacht werden kann. Des besondere Dichtebereich und das natürliche Bindemittel gewährleisten einen vollständig natürlichen und atmungsaktiven Dämmstoff.

Es ist bevorzugt, daß das Wärmedämmelement übereinander angeordnete Vliesschichten aufweist. Diese Anordnung ist herstellungstechnisch bevorzugt und erlaubt die Herstellung von Wärmedämmelementen unterschiedlicher Dicke, die an die spezielle Verwendung am Einbauort angepaßt ist.

Die Leinfasern haben bevorzugt eine Länge von 2 bis 9 cm, besonders bevorzugt 3 bis 8 cm und ganz besonders bevorzugt 4 bis 6 cm. Bei dieser Länge ist eine geeignete Vernetzung der Fasern untereinander erzielbar.

Die Vliesschichten haben bevorzugt eine Dichte von 10 bis 18 kg/m³ und besonders bevorzugt etwa 12 kg/m³. Bei dieser Dichte ist eine großvolumige Herstellung von Wärmedämmelementen geringen Gewichts möglich, so daß die Wärmedämmelemente noch bequem transportabel sind. Gleichzeitig ist auch bei Dichten im unteren Bereich der angegebenen Bereiche die Wärmedämmwirkung noch ausreichend.

Das Bindemittel ist ein natürliches Bindemittel, beispielsweise aus Stärke, Harz oder Natriumwasserglas. Ein derartiges Bindemittel gewährleistet ein durchgehend natürlich gewonnenes Wärmedämmelement.

Es ist ferner bevorzugt, daß die Vliesschichten zur Brandhemmung Borax und/oder Wasserglas enthalten. Der Zusatz dieser Stoffe verringert die Brandgefahr der Vliesschichten unter Wärmeeinwirkung und ist feuerhemmend.

Das erfindungsgemäße Verfahren zum Herstellen eines Wärmedämmelementes ist im Anspruch 6 angegeben.

Die Leinfasern werden in herkömmlicher Weise gewonnen aus Faserlein, der durch die in der Technik bekannten Schritte "Raufen", "Wenden", "Rösten" und "Schwingen" zu Kurzfasern aufbereitet wird. Diese Kurzleinfasern werden sodann mit einem natürlichen Bindemittel in einem geeigneten Verhältnis gleichförmig gemischt, so daß das Bindemittel einen geeigneten Anteil an der Gesamtmasse haben. Dieses ungeordnete Fasergemisch wird in einer Kardiermaschine geeignet ausgerichtet, so daß eine einheitlich ausgerichtete Vliesschicht einheitlicher Dicke gewonnen wird. Die Kadiermaschine wirkt ähnlich wie ein Kamm. Sodann werden mehrere Vliesschichten übereinander gelegt, um ein Wärmedämmelement in der gewünschten Dicke herzustellen. Die übereinandergelegten Vliesschichten werden bevorzugt durch gegenläufig eingreifende Nadelkissen miteinander vernadelt und auf diese Weise verbunden. Alternativ können die Vliesschichten oder die Fasern nur einer Vliesschicht durch Beaufschlagung mit Druckluft miteinander verbunden werden. Das Verbundwärmedämmelement wird nun in einem Trockner auf eine Temperatur zwischen 100° und 150° C erwärmt, so daß es zu einem Schmelzen des Bindemittels kommt, das die Fasern der einzelnen Vliesstoffe untereinander und-/oder miteinander verbindet. Die Temperatursteuerung richtet sich nach der Art des verwendeten Bindemittels, wobei eine Temperatur bis zu 300° C möglich ist.

Das Bindemittel muß nicht in Faserform vorliegen, sondern kann eine beliebige Form aufweisen, die zur Verbindung der Leinfasern geeignet ist. Bevorzugt liegt das Bindemittel in verteilter Form vor.

Weitere Vorteile, Merkmale und Anwendungsmöglichkeiten der vorliegenden Erfindung ergeben sich aus der nachfolgenden Beschreibung zweier bevorzugter Ausführungsbeispiele in Verbindung mit der Zeichnung.

Fig. 1 zeigt einen Querschnitt durch ein erfindungsgemäßes Wärmedämmelement mit einem Basisfilz.

Fig. 2 zeigt eine andere Ausführungsform des erfindungsgemäßen Wärmedämmelementes mit einem beidseitigen Basisfilz.

Fig. 3 zeigt eine perspektivische Aufsicht auf die Ausführungsform von Fig. 1.

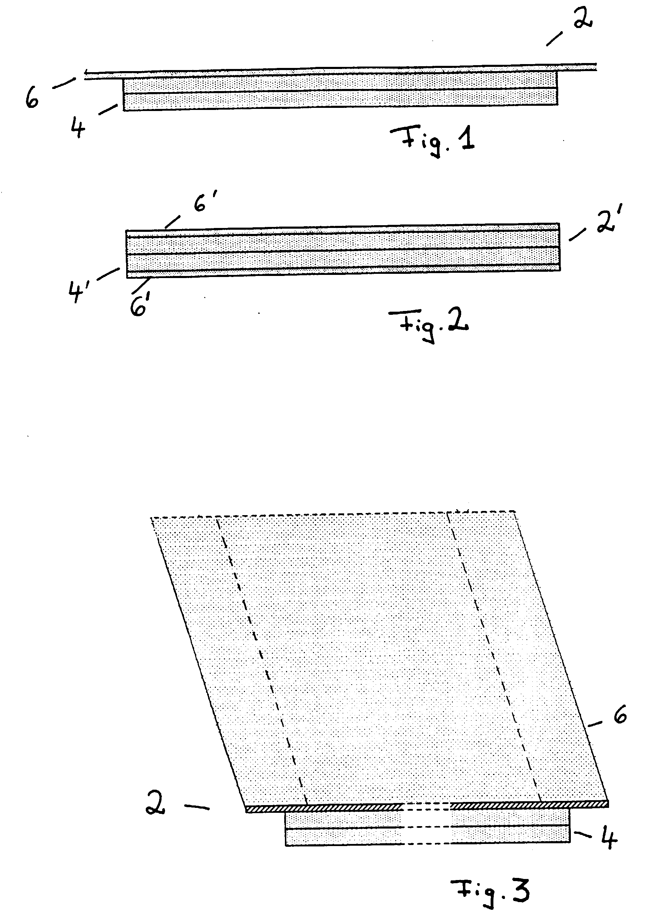

Fig. 1 zeigt ein Wärmedämmelement 2, das aus zwei übereinanderliegenden Vliesschichten 4 und einem darüber angeordneten Basisfilz 6 besteht. Die Vliesschichten 4 sind jeweils etwa 1 mm dick und durch Vernadeln miteinander verbunden. Der Basisfilz 6 dient als Kaschierung, die aufgeleimt oder aufgenadelt ist. Das Wärmedämmelement kann jedoch auch ohne Basisfilz 6 verwendet werden.

Fig. 2 zeigt ein Wärmedämmelement mit beidseitig aufgebrachten Basisfilzen 6', 6'. Anstelle des Basisfilzes 6' kann jedoch auch ein Flachsfilz, Jutefilz, Wollfilz, Baumwollfilz oder Papier verwendet werden. Die übereinander geschichteten Vliesschichten 4' werden durch vertikales Vernadeln oder Kleben rechtwinklig zur Ebene der Lagen miteinander verbunden.

Fig. 3 zeigt eine perspektivische Aufsicht auf die Ausführungsform von Fig. 1, wobei das Vernadeln des Basisfilzes 6 deutlich zu sehen ist. Durch das Vernadeln werden materialeigene Fasern quer zur Ebene der Lagen eingezogen. Um die füllige Struktur der Vliesschicht zu erhalten, wird die zur Verbindung der Schichten dienende Nadelung nur in ausgewählten Zonen durchgeführt, etwa durch eine Steppnaht.

Das erfindungsgemäße Wärmedämmelement besteht somit aus Vliesschichten, die aus Leinfasern bzw. Flachsfasern aufgebaut sind. Damit wird ein baubiologisch neuartiges Wärmedämmelement geschaffen, das sowohl biologisch gewinnbar und abbaubar ist als auch hervorragende Wärmedämmeigenschaften hat. Ein synthetisches Material entfällt. Die Leinfasern bzw. Flachsfasern (Linum usitatissimum) werden innerhalb der Dämmzone atmungsaktiv eingeschlossen, wobei die Dämmzone von Bauelementen des Gebäudes begrenzt ist. Die Dämmzone ist von einer die Leinfasern bzw. Flachsfasern zu einem Dämmelement zusammenfassenden Ummantelung, beispielsweise dem genannten Basisfilz 6 begrenzt. Die Dämmzone kann in mehrere Kammern unterteilt sein, in der sich jeweils ein einzelnes Wärmedämmelement befindet. In den vorliegenden Ausführungsformen ist das Wärmedämmelement zu einer Platte bzw. Matte ausgeformt, die nach dem Trocknungsprozeß geeignet zugeschnitten wird. Die die Vliesschicht bildenden Leinfasern bzw. Flachsfasern sind durch Vernadelung mittels Filznadeln zu einem Formkörper gewünschter Dicke verbunden. Alternativ können die Vliesschichten nicht in gleicher Richtung übereinander, sondern kreuzweise übereinander gelegt werden. Zur Handhabung können die Vliesschichten einseitig oder beidseitig einen abschließenden Basisfilz aufweisen, der an ausgewählten Verbindungszonen mit den Vliesschichten verbunden ist. Diese Verbindungszonen können in Form von Steppnähten verteilt sein. Alternativ wird nur eine Vliesschicht hergestellt und deren Fasern werden miteinander verbunden.

## Patentansprüche

1. Wärmedämmelement für den Wand-, Decken-, Dach-, Tür- oder Fußbodenbereich von Gebäuden, welches aus Leinfasern gebildet ist, die Elementarfasern mit Durchmessern von 10 bis 25 µm aufweisen, wobei die Leinfasern untereinander durch ein Bindemittel verbunden sind und in miteinander verbundenen Vliesschichten (4, 4') angeordnet sind, dadurch gekennzeichnet, daß die Vliesschichten (4, 4') eine Dichte von 7,5 bis 25 kg/m³ aufweisen und das Bindemittel ein natürliches Bindemittel ist, beispielsweise aus Stärke, Harz oder Wasserglas.

2. Wärmedärmmelement nach Anspruch 1,
dadurch gekennzeichnet, daß
die Vliesschichten (4) übereinander angeordnet sind.

3. Wärmedämmelement nach Anspruch 1 oder 2, dadurch gekennzeichnet, daß die Leinfasern jeweils eine Länge von 2 bis 9 cm, bevorzugt 3 bis 8 cm, besonders bevorzugt 4 bis 6 cm haben.

4. Wärmedämmelement nach einem der Ansprüche 1-3; dadurch gekennzeichnet, daß die Vliesschichten (4) eine Dichte von 10 bis 18 kg/m³ und bevorzugt etwa 12 kg/m³ haben.

5. Wärmedämmelement nach Anspruch 1, dadurch gekennzeichnet, daß die Vliesschichten (4) zur Brandhemmung Borax und/oder Wasserglas enthalten.

6. Verfahren zum Herstellen eines Wärmedämmelementes mit den Schritten:
Gewinnen von Leinfasern, mit einem Elementarfaserdurchmesser zwischen 10 und 25 µm;
Mischen der Leinfasern mit einem natürlichen Bindemittel;
Ausrichten des Fasergemisches und Gewinnen einer Vliesschicht (4,4') mit einer Dichte zwischen 7,5 und 25 kg/m³;
Verbinden mehrerer Vliesschichten miteinander, und Trocknen der Vliesschichten (4).

7. Verfahren nach Anspruch 6, dadurch gekennzeichnet, daß der Trocknungsschritt eine Temperatur zwischen 100° und 150° C verwendet.

## Claims

1. Heat insulation element for wall, ceiling, roof, door or floor space of buildings formed of flax fibers providing elementary fibers with diameters from 10 to 25 to 25 µm, said lineaceous fibers being connected among each other by means of a binding agent and being disposed in nonwoven layers (4, 4') which are connected among each other, characterized in that said nonwoven layers (4, 4') provide a thickness from 7.5 to 25 kg/m³ and said binding agent is a natural binding agent, such as for example starch, resine or water glass.

2. Heat insulation element according to claim 1, characterized in that said nonwoven layers (4) are disposed on top of each other.

3. Heat insulation element according to claim 1 or 2, characterized in that said flax fibers provide a length of 2 to 9 cm, preferably of 3 to 8 cm, most preferably 4 to 6 cm.

4. Heat insulation element according to one of the claims 1 to 3, characterized in that said nonwoven layers (4) provide a density of 10 to 18 kg/m³ and preferably approximately 12 kg/ m³.

5. Heat insulation element according to claim 1, characterized in that said nonwoven layers (4) contain borax and/or water glass for fire resistance.

6. Method for producing a heat insulation element comprising the steps of :
gaining flax fibers providing an elementary fiber diameter between 10 and 25 µm;
mixing said flax fibers with a natural binding agent; orienting the fiber mix and gaining a nonwoven layer (4, 4') providing a density between 7.5 and 25 kg/ m³; connecting several nonwoven layers among each other and drying said nonwoven layers (4).

7. Method according to claim 6, characterized in that said drying step employs a temperature between 100° and 150° C.

## Revendications

1. Elément calorifuge pour la zone du mur, la zone du plafond, la zone du toit, la zone de la porte ou la zone du plancher de bâtiments, qui est constitué de fibres de lin, qui présentent des fibres élémentaires avec des diamètres de 10 à 25 µm, les fibres de lin étant reliées entre elles par un liant et disposées dans des couches non tissées (4, 4') reliées entre elles, caractérisé en ce que les couches non tissées (4, 4') présentent une densité de 7,5 à 25 kg/m³ et le liant est un liant naturel, par exemple à base d'amidon, de résine ou de verre soluble.

2. Elément calorifuge selon la revendication 1, caractérisé en ce que les couches non tissées (4) sont disposées les unes au-dessus des autres.

3. Elément calorifuge selon la revendication 1 ou 2, caractérisé en ce que les fibres de lin ont respectivement une longueur de 2 à 9 cm, de préférence 3 à 8 cm, et avec une préférence particulière 4 à 6 cm.

4. Elément calorifuge selon l'une quelconque des revendications 1 à 3, caractérisé en ce que les couches non tissées (4) ont une densité de 10 à 18 kg/m³ et de préférence environ 12 kg/m³.

5. Elément calorifuge selon la revendication 1, caractérisé en ce que les couches non tissées (4) contiennent du borax et/ou du verre soluble pour l'inhibition au feu.

6. Procédé pour la fabrication d'un élément calorifuge avec les étapes suivantes :
production de fibres de lin, avec un diamètre de fibre élémentaire entre 10 et 25 µm ;
mélange des fibres de lin avec un liant naturel ;
alignement du mélange des fibres et production d'une couche non tissée (4, 4') avec une densité comprise entre 7,5 et 25 kg/m³;
assemblage de plusieurs couches non tissées entre elles, et
séchage des couches non tissées (4).

7. Procédé selon la revendication 6, caractérisé en ce que l'étape de séchage utilise une température comprise entre 100° et 150°C.
